# EUROPEAN PATENT SPECIFICATION

(11) **EP 2 739 191 B1**
(45) Date of publication and mention of the grant of the patent: **26.09.2018**
(21) Application number: 12822648.7
(22) Date of filing: 02.08.2012
(51) Int. Cl.: H05B 1/02, A47J 44/00, F24C 7/08

(54) **METHODS AND APPARATUS FOR INTUITIVE COOKING CONTROL**
VERFAHREN UND VORRICHTUNG ZUR INTUITIVEN STEUERUNG VON KOCHPROZESSEN
PROCÉDÉS ET APPAREIL DE COMMANDE DE CUISSON INTUITIVE

(30) Priority: 05.08.2011 AU 2011903120
(43) Date of publication of application: 11.06.2014
(73) Proprietor: Breville Pty Limited, Botany, NSW 2019 (AU)
(72) Inventor: RYAN, Garth, Helensburgh, New South Wales 2508 (AU); HENSEL, Keith James, deceased (AU); LAI, Ze Kang, Glenfield, New South Wales 2564 (AU)
(74) Representative: Zimmermann, Tankred Klaus
(86) International application number: PCT/AU2012/000909
(87) International publication number: WO 2013/020162

(56) References cited:
- AU-A1- 2008 202 100
- DE-U1-202008 006 988
- JP-A- 10 300 096
- US-A- 5 802 957
- US-A- 5 877 477
- US-A1- 2006 047 344
- US-A1- 2008 203 085
- US-A1- 2010 006 561

## Description

### FIELD OF THE INVENTION

The invention relates to cooking appliances and more particularly to intuitive controls for cooking appliances.

The invention has been developed primarily for use as a cooking appliance having intuitive cooking control and will be described hereinafter with reference to this application. However, it will be appreciated that the invention is not limited to this particular field of use.

### BACKGROUND OF THE INVENTION

Any discussion of the prior art throughout the specification should in no way be considered as an admission that such prior art is widely known or forms part of the common general knowledge in the field.

One example of the technology of the present invention applies to domestic, counter-top style multi-function ovens. Such an appliance is disclosed in the Applicant's co-pending PCT Application No. PCT/AU2009/000465. Such ovens are capable of multiple cooking functions including, but not limited to pre-heating, toasting, roasting, baking, broiling, defrosting and reheating. Each function is associated with a constant nominal temperature (or a temperature that varies overtime) and an ultimate function time. Further, such oven may have multiple heating elements that are used either alone or together, in various combinations, in the same or in different cooking functions.

At the nominal end of a particular cooking time, it is sometimes the case that the user will visually observe the food in the oven (either by looking through the glass oven door or opening it) and determine that additional time is required. Simple examples of supplemental cooking cycles are known from the applicant's published USA patent application US2008/0203085A1 in which there is disclosed a toaster having a user selectable supplementary toasting cycle intended to change the shade of food after or during a toasting cycle. However, the amount of additional time actually required (or ideally required) will be necessarily based on a number of different parameters. The amount of additional time required to satisfy the user's requirements (supplemental cycle time) will depend on parameters (for example) such as the quantity and type of food being prepared, the time it has already been heated for, and the actual temperature of the oven cavity at the time the decision is made. Thus, the user, being generally unaware of the complex problem before him is compelled to guess the additional increment of additional time that will be required.

AU2008202100A1 and DE202008006988U1 also disclose arrangements similar to US2008/0203085A1 in which a toaster has a user selectable supplementary toasting cycle intended to change the shade of food after or during a toasting cycle.

US Patent 5802957 discloses a toaster having a user control panel for receiving and displaying user selections corresponding to a desired toast darkness setting. The control panel also has pre-programmed custom settings for various modes of operation.

Also documents US 2010/0006561 A1, US 2006/0047344 A1, JP-A-410300096 and US-A-5 877 477 disclose cooking apparatuses with a function to add a supplemental time to the cooking time. The present invention seeks to provide simple or intuitive solutions to this situation.

### OBJECT OF THE INVENTION

It is an object of the present invention to overcome or ameliorate at least one of the disadvantages of the prior art, or to provide a useful alternative.

It is an object of the invention in a preferred form to provide a multi-function cooking apparatus that performs for different functions, different supplemental cooking times, each one instigated by a single user or input command.

It is another object of the invention in a preferred form to provide apparatus and methods for an intuitive cooking control that is applicable to a high powered kitchen appliance.

It is another object of the invention in a preferred form to provide intuitive, single button cooking control in a kitchen appliance whereupon an additional increment of heating time is based on one or more parameters, the value of which parameters are gathered from the appliance itself.

### SUMMARY OF THE INVENTION

According to the present invention there is provided a multi-function cooking apparatus as set out in claim 1. Preferred optional features are set out in the attached sub-claims.

The present specification discloses a user interface apparatus for a cooking appliance, the apparatus including:
a user interface element; and
a processor element adapted to receive an input command from the user interface element; the processor element being further configured to control one or more heating elements used for cooking.

The present specification also discloses a multi-function cooking apparatus, the apparatus including:
a user interface element;
one or more heating elements used for cooking; and a processor element adapted to receive an input command from the user interface element; the processor element being configured to control the one or more heating elements used for cooking.

Preferably, the user interface element includes a function selector having a plurality of cooking function configurations. More preferably, the plurality of cooking function configurations include one or more of the set comprising:
a toast cooking function;
a bagel cooking function;
a bake cooking function;
a broil cooking function;
a roast cooking function;
a cookies cooking function;
a pizza cooking function; and
a reheat cooking function.

Preferably, the user interface element includes a first input selector for enabling a user to select when a bit more additional cooking time is requested; the processor element adding a supplemental cooking time to a current cooking time.

Preferably, the user interface control element includes a first input selector for enabling a user to select when a bit more additional cooking time is requested; such that, even if the first input selector is selected after completion of a user selected cooking cycle, the processor element provides a further supplemental cooking time.

Preferably, the user interface control element includes input selectors for one or more of the following:
user selection for temperature or darkness;
user selection for time or slices;
user section for temperature conversion;
user selection of frozen food cooking.

Preferably, the input command causes the processor to configure the apparatus for either a different operating function or a different supplemental cooking time.

Preferably, the user interface element receives a user input that causes the input command to be received by the processor element; wherein the input command causes the processor element to configure the apparatus for a different supplemental cooking time based on one or more configuration parameters. More preferably, the one or more configuration parameters are gathered from the appliance.

Preferably, the apparatus has a single user input associated with the input command that causes the processor element to configure an additional heating interval based on values of one or more current configuration parameters gathered from the apparatus.

Preferably, the processor element is adapted to interrogate a data table for obtaining a cooking time and a supplemental cooking time based on one or more configuration parameters.

Preferably, the processor is configured to automatically terminate cooking after a predetermined time limit.

Preferably, the user interface element comprises a graphic display element for presenting current configuration parameters.

Preferably, the processor is configured to produce an audible alert.

Preferably, the apparatus has an adjustable cooking rack. More preferably, the adjustable cooking rack is adjustable to one of at least 3 rack positions.

Preferably, the apparatus has a removable pull-out crumb tray.

Preferably, the apparatus is a high powered kitchen appliance. More preferably, the high powered kitchen appliance is a toaster oven has a capacity to cook either 4-slices of toast or an 11 inch pizza.

Preferably, the apparatus being a toaster oven having a cooking cavity, the apparatus comprising: at least one upper heating element within the cooking cavity; at least one lower heating element within the cooking cavity; a substantially horizontal cooking rack located intermediate the upper heating element and lower heating element; a door for substantially closing the cooking cavity; wherein a processor element is coupled to the user interface element and adapted to independently control each of the upper heating elements and lower heating elements. More preferably, the apparatus comprises: a plurality of upper heating elements; and a plurality of lower heating element. Most preferably, the processor element manages power consumption by enabling full power to be consumed by the heating element only during limited circumstances. The limited circumstances for full power to be consumed by the heating element are preferably: during an initial preheating portion of a cooking function; after the door has been opened; and where the total heating time in a given cooking cycle is less than a predetermined limit.

The present specification also discloses a method of intuitive cooking control for a cooking appliance, the method comprising the steps of:
(a) receiving a user input command indicative of a user selected cooking function;
(b) interrogating a data table for obtaining a cooking time and a supplemental cooking time based on one or more current configuration parameters;
(c) determining a total cooking time; and
(d) activating at least one heating element.

Preferably, determining a cooking time uses stored values from a look-up data table.

Preferably, the method further comprising the steps of:
receiving a user request for a supplemental increment cooking time; and
calculating a supplemental increment cooking time.

Preferably, calculating the supplemental increment cooking time uses a different algorithm according to the user selected cooking function. More preferably, calculating the supplemental increment cooking time uses stored values from a look-up data table.

Preferably, the apparatus comprises at least one upper heating element and at least one lower heating element; and activating at least one heating element comprises operating the heating elements intermittently and simultaneously until the cycle is completed for maintaining a temperature within the cooking cavity about a target temperature.

Preferably, the apparatus comprises at least one upper heating element and at least one lower heating element; and activating at least one heating element comprises operating the heating elements intermittently and independently until the cycle is completed for maintaining a temperature within the cooking cavity about a target temperature.

The present specification also discloses a micro-processor based cooking appliance having a single user input associated with a microprocessor command that establishes an additional heating interval that is based on the values of one or more parameters that are gathered from the appliance itself.

### BRIEF DESCRIPTION OF THE DRAWING FIGURES

In order that the invention be better understood, reference is now made to the following drawing figures in which:
- FIG. 1: is a schematic diagram illustrating an example of the methods and apparatus of the present invention;
- FIG. 2: is a perspective view of an oven;
- FIG. 3: is a plan view of a user interface panel;
- FIG. 4A: depicts a table illustrating cooking time for a toast function according to darkness and quantity;
- FIG. 4B: depicts a table illustrating cooking time for a bagel function according to darkness and quantity; and
- FIG. 5: is a graph illustrating oven temperature during a representative BAKE mode cooking cycle.

### BEST MODE AND OTHER EMBODIMENTS

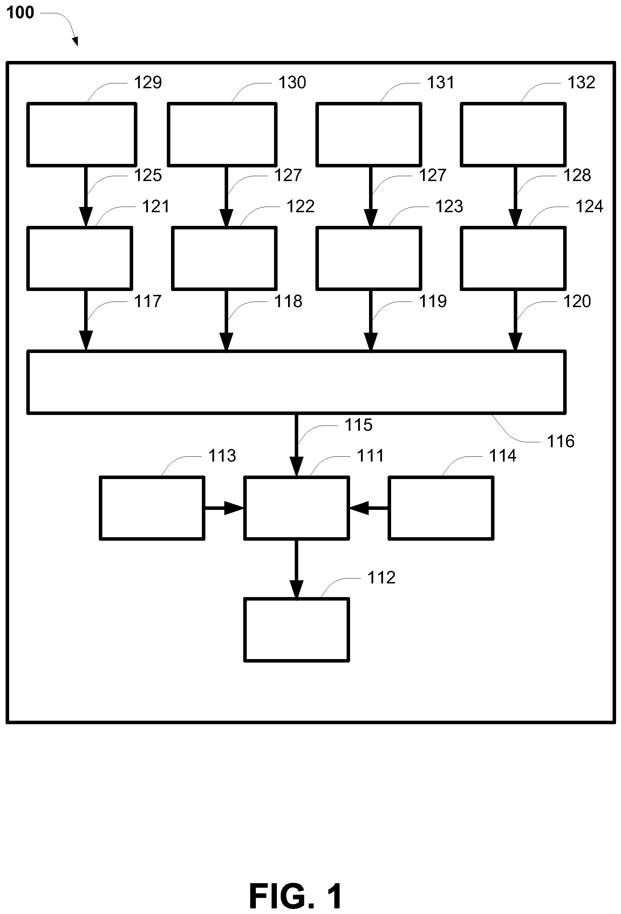

As shown in FIG. 1, an electrical appliance such as a multi-function counter-top oven 100 contains a micro-processor control unit ("MCU") 111 that receives the various inputs and user commands associated with the operation of the appliance 100, the MCU controls the various functions of the appliance such as the operation of the heating element 112 and the graphic display. In the example of FIG. 1, the various conventional user inputs 113 comprise signals or values that result from the operation of user controls generally found on the control panel of this type of appliance. The inputs 113 allow the user to specify various preferences for cooking times, styles, cooking durations, alarms etc. These inputs are ultimately used by the MCU as data or commands etc.

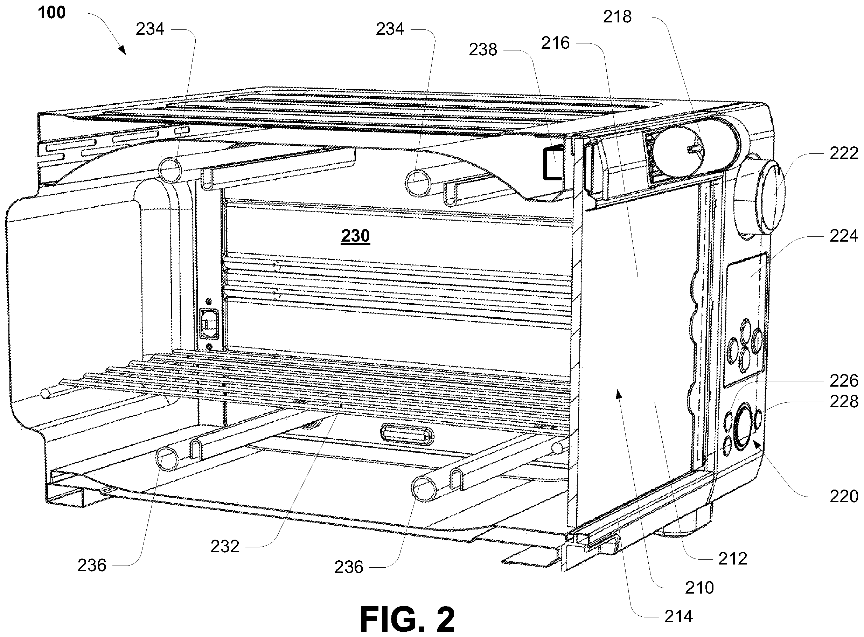

In one example, the teaching of the present invention are applied to a counter-top oven 100 of the type depicted in FIG. 2. As illustrated in FIG. 2, the oven 100 has a front surface 210 comprising a hinged front door 212. In preferred embodiments, the door is hinged along a lower horizontal edge 214. The door features a transparent glass panel 216. An upper edge of the door supports a horizontal handle 218.

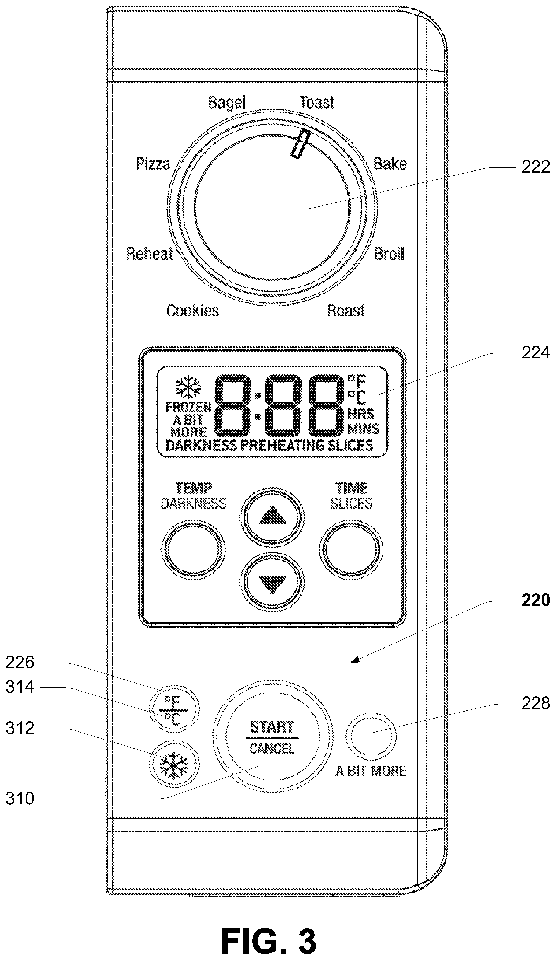

As shown in FIG. 3, the front surface 210 of the oven 100 further comprises a user interface panel 220. The user interface panel 220 further comprises large, circular, rotating, function selection knob 222 that is uppermost on the control panel 220 and which is larger than any other user input and nearly as wide as the control panel 220. The control panel also has a graphic display 224 and various other user inputs 226. The user inputs 226 maybe buttons, knobs, sliders or dials. One of the user inputs is the button 228 that the user activates or presses (once or more) to request (one or more) supplemental increments of cooking time, after a nominal cycle is completed that extra time being referred to as a supplemental cycle. The user input 228 is located immediately next to the primary start/cancel button 310. In preferred embodiments, the supplemental increment input 228 is preferably located to the right of the start input button 310. In preferred embodiments, no other user input is closer to the input 228 then the start button 310. In addition to adding one or more supplemental increments of cooking time to a cooking cycle that is in progress, the supplemental increment request input 228 can act to initiate a supplemental increment or supplemental cycle, even when the oven has completed the entirety of a user selected cooking cycle.

In the particular example of FIG. 2, the internal cavity 230 of the oven 100 comprise a removable rack 232 that can be located in any one of a number of different vertical heights. In addition, the internal cavity is heated by one or a pair of upper heating elements 234 and one or a pair of lower heating elements 236. The upper elements 234 always act in unison as do the lower elements 236. In preferred embodiments, the upper element or elements 234 consume a total of 900 watts (900W). Similarly, the lower element or elements 236 also consume a maximum total wattage of 900 watts.

In other embodiments, different numbers of elements providing different wattages may be similarly employed. In some selected embodiments of the invention, the oven has three upper elements and three lower elements of 400W each providing a total wattage of 2400W.

In the example of FIG. 2, the upper and lower elements when used in conjunction with one another consume a total of 1800 watts. However, in this example, the total 1800 watt power consumption only occurs in three instances. The first instance is during the initial or preheating portion of a cooking function. Generally, this preheating interval is no longer than about three minutes. The second instance of full power is when the oven door has been opened and the internal heat of the cavity 230 has been largely lost. When this open door condition has been detected by the oven's MCU 111, the full 1800 watts available to the totality of the cooking elements may be applied for a short period of time to restore the appropriate cooking temperature in a shorter period of time than would otherwise occur. The open door condition may be detected by a predetermined drop in temperature as measured by the thermistor that is associated with the MCU or by the output of a micro switch 238 that is adjacent to and operatively associated with the oven door 212. The third instance where full 1800W power is applied is where the total "on" time for the full power regime is less than one hour in a given cooking cycle.

In order that the oven not overload a house on an electrical circuit, its power consumption is carefully controlled. In certain countries with a 120V 15A power supply, full power (1800W) is only consumed during limited circumstances. For example, the full 1800 watt consumption is available during a bread toasting function cooking cycle, but only for a relatively short period of time. The default cooking time for a toast or bagel toasting cycle does not exceed 7 minutes, this being for the darkest toast setting. For these toast and bagel function cooking cycles, all of the heating elements may be on continuously and simultaneously for the full cooking cycle.

The various cooking functions available to the user are selected using the knob 222 and the name of the function is printed on the panel 220 or displayed on the graphic interface 224. Each function represents a different way of using the heating elements to achieve a particular cooking outcome. The following examples provide an insight into exemplary or representative functions and how these are advantageous to the user.

### Toast Function

In the toast function, all of the heating elements are potentially on continuously for the full duration of a cycle so the power draw is continuously 1800W. However, the cycle time is limited to no more than about 10 minutes. A typical default cycle time might be 7 minutes. The availability of maximum heat in the top and bottom elements ensures that the toast is cooked as evenly and quickly as possible. During the toasting function, both the top and bottom elements are on continuously until the oven reaches an approximate, actual or inferred limit temperature of about 250C. If, because of prior oven use or other factors, the safe limit temperature is reached, the elements are operated intermittently but simultaneously until the cycle is completed. The object of the limit temperature is to prevent damage to the non-stick lining of the oven.

### Bagel Function

During the bagel function cooking cycle, all of the elements are on for an initial 2 minutes and twenty seconds. Thereafter, the bottom elements are switched off for the remainder of the cooking time so the cut face is toasted, but the outer face is more soft. There is no preheating during the toast or bagel functions.

### Bake Function

The bake function is associated with a maximum preheating of 3 minutes with all elements delivering the maximum output of 1800W. Thereafter, the bake function cooks using a power interval of 27 seconds. The interval comprises 17 seconds when either a top or bottom element (or pair) on and a minimum of 10 seconds when that element (or pair) is off. This interval is repeated in a pattern that alternates the operation of the top and bottom elements. More "off" time may be added between the 27 seconds cycle as a means to limit the temperature that was selected by the user. In one example, the pattern is defined by the power interval being repeated consecutively, twice with the bottom elements, then once with the top elements. This ensures the top of a cake is not over cooked. The three power intervals taken together constitute said pattern and it is repeated until the cooking cycle is finished. The interval and pattern limit the total "on" time that the combined elements experience during a cooking cycle. In this example, the maximum apparent cooking time for the bake function is 1.5 hours, resulting in a total "on" time of 59.7 minutes when the interval and pattern are taken into account. During the bake function, 1800W is only consumed during the preheating or if the oven door has been opened, the maximum wattage being delivered only enough time to restore the nominal cooking temperature.

### Roast Function

The roast function is similar to the bake function except that the pattern comprises over a maximum cycle time of 1.5 hours, simultaneous operation of the top and bottom elements over an interval comprising 17 seconds "on" and a minimum of 10 seconds "off". This provides more top heat to crisp the roast.

### Broil Function

The broil function has a maximum cooking time of about 20 minutes. In the broil function both the top and bottom elements are all on at full power, continuously and simultaneously. However, when the MCU registers a thermistor reading corresponding to an inferred centre temperature above about 140C the bottom elements are cycled on and off while the top elements remain on. When the MCU detects a thermistor reading above the limits for the internal non-stick coating,, both the top and bottom elements are turned off.

### Pizza or Cookies Function

In the pizza or cookies function, the oven preheats for 3 minutes at maximum power consumption of 1800W, this being with all of the top and bottom elements on. The maximum cooking cycle time is limited to 55 minutes at full power consumption thus providing no more than 58 minutes at 1800W. When the MCU detects (or infers) that the oven temperature has reached the default or user selected temperature, the top and bottom elements cycle on and off together, utilising an interval of 30 seconds on and a minimum 30 seconds off. This type of cycling reduces the intensity of the cooking and minimises the chances of burning.

### Reheat

During the food reheat function, there is preferably a preheating interval of maximum 3 minutes at 900W. This is done by running the bottom element only. During the remainder of the reheat function cycle time, the maximum cycle is limited to 2 hours at 900W, this being with the bottom elements or top elements only. At no time in the cycle is the full power or 1800W used.

### Supplemental Increment

The present invention provides a separate and distinct "request supplemental increment" user input 114, 228 in the form of a button, switch, lever or dial, the activation of which is interpreted by the micro-processor 111 as a command to provide one increment of additional heating or cooking time. In some embodiments, each separate activation of the input 114 by a user results in the provision of an extra but identical increment. Thus, pressing an activation button once might result in an additional 30 seconds of heating, while pressing the activation button twice would result in 60 seconds. The sum total of consecutive, uninterrupted supplemental increments make up a user requested supplemental cycle.

The present invention provides new forms of control over the heating element when a user actuates the additional increment input 114. In accordance with the teachings of the present invention, the first and subsequent additional increments in a supplemental cycle 115 that is determined by the MCU 111 using any one of a number of different algorithms 116. In some examples, the additional time increment 115 can be determined, for all cooking functions that a machine performs, by a single algorithm 116. In other examples, a different algorithm is used according to the user selected cooking function.

In some embodiments, the supplemental cycle associated with a single cooking function may be associated with two or more algorithms depending on an additional factor such as toast colour, food quantity, oven cavity temperature, cavity humidity etc. Providing additional algorithms for the supplemental cycle of a single cooking function allows the additional increment to be calculated with ever greater attention to actual conditions and therefore greater usefulness. For the purpose of the present specification and its claims, the term "algorithm" will be deemed to include the obtaining of a supplemental cooking time based at least in part, or totally on an input value from a table of stored values or "look up" table that is within or accessed by the MCU 111.

In the example of FIG. 1, the algorithm 116 utilises one or more input values 117, 118, 119, 120 that are based on input variables 121, 122, 123, 124. The input variables are (for example) based on data signals 125, 126, 127, 128 that are provided by sensors, stored valves or the outputs of other data capture devices 129, 130, 131, 132. It will be appreciated that the result of applying a given algorithm 116 can be based on one or more input values (117-120). In respect of the preferred embodiments of the invention, a key input value to the algorithm is either the default or the user selected temperature associated with a given cooking function. This is because the supplement increment or supplement cycle operates at the same temperature as the user selected or default temperature that is in effect when the additional increment input 228 is activated. By way of example, if the selected function is BAKE and the user selected temperature is 150C, then the supplemental increment will be conducted at 150C. Thus, the input value to the algorithm is based on the user selected or predetermined temperature and not the temperature that is measured by the thermistor in the oven cavity.

In one example, the algorithm 116 determines the supplemental cycle time (or its increments) by utilising a stored value from a look-up table based solely on an input value 117 that is representative of a specific cooking function regardless of cooking cycle time. In this example, the only data capture device 129 that is required is the function selection device that is incorporated into the control panel of the oven. Thus, different functions are associated with different input values 117 and the algorithm uses each distinct input value to obtain a unique supplemental time increment. As an example, if the data captured device indicates that the user selected function is BAKE and the MCU 111 determines that the request increment user input 114 has been selected, the MCU 111 will add an additional increment of 5 minutes to either the default or the user selected cooking time. However, if the input value 117 is indicative of the TOAST function the algorithm will determine from the table of stored values that the additional time increment is 30 seconds. In some embodiments, each activation of the request increment input 114 will result in the addition of an identical increment to the established cooking time.

In a variation of the above method and apparatus, two data sources 129, and 130 are required by the algorithm in order to determine an additional increment of time. The first data source is the user select function, as outlined above. The second data source represents a particular state that the oven is in. This state can be represented as, for example, door open or door closed. A second example of an oven's state can be cooking cycle completed or cooking cycle not completed. Because a state is defined as a variable with only a few possible values, a logical algorithm is a table of stored values or look-up table as previously described. As would be expected, the stored value and thus the additional time increment 115 would be greater when a cooking cycle has been completed than if that cooking cycle had not been completed when the user input 114 was selected. The same logic is true when the oven door is open.

A further variation of this method operates in accordance with the above teachings but the additional increment of cooking time is a percentage of the default or user selected cooking time from the previous cycle, rather than being an additional increment that is fixed in duration. Thus, individual cooking functions can be assigned unique additional increment percentages. The incremental percentage can also be varied according to the oven's state. In one example, if the user has selected a BAKE function and the input 114 is selected, the additional time increment 115 might be, say, 10% of the default or user selected cooking time. However, if the BAKE cycle has actually finished as indicated by the state determining device 130, then 14% of the default or user selected cooking time would be added as the additional time increment 115.

For a further example of the above apparatus and methodology uses a third data capture device 131. In this example, the third data capture device 131 is a thermocouple, thermistor or other temperature probe that provides a data signal 127 that can be interpreted 123 to produce an input value 119 which is actually used by the algorithm 116. In a simplified example of this way of determining an additional time increment 115, the oven cavity temperature is measured by the device 131 or a cavity temperature is inferred from the output of the device. According to which cooking function has been entered by the user 129, the algorithm 116 determines an increment 115 that is based both on the function and the cavity temperature. The temperature input value 119 can be used in two different ways. In a first way, the table of stored values can be organised so that discreet ranges of cavity temperature provide a single fix value. A narrower range of values in the stored value table, the more accurate the input value to the algorithm will be. In a second example of a temperature dependant method, the actual or inferred oven cavity temperature determined by the data capture device 131 can be compared to the default or user determined temperature, whereby the difference between the two is essentially the input to the table of stored values.

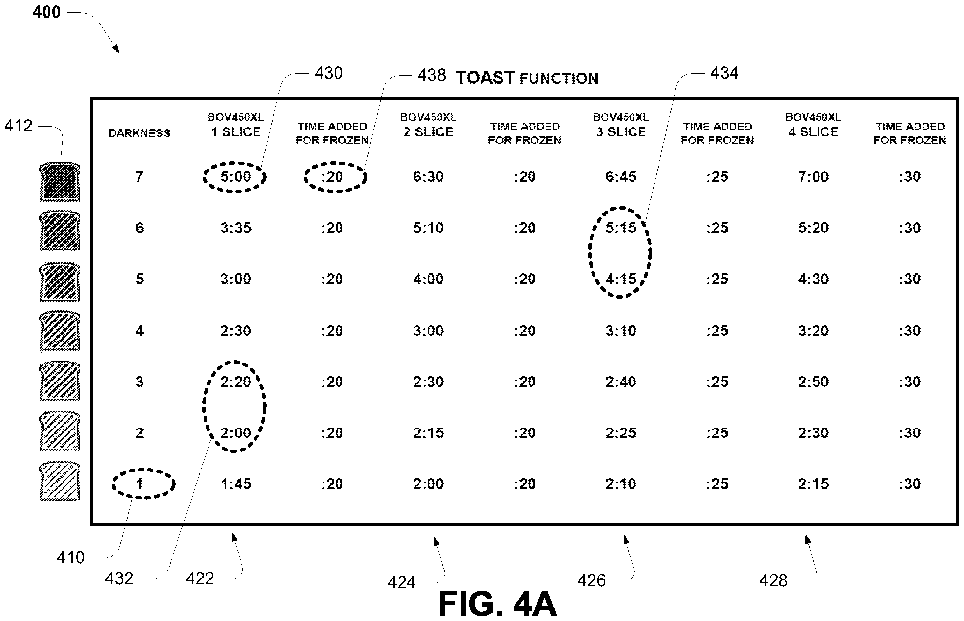

Particular methods are required for certain specific cooking functions. When a user selects the "TOAST" or "BAGEL" functions of a multi-function toaster or oven, they do not also select a cooking cycle time or duration. Instead, in the TOAST or BAGEL modes, the user selects the duration indirectly by choosing a toast colour or darkness. Toast colour or darkness is expressed on the graphic interface of the oven either as a number range 1-7, or a continuous or discreet range of images intended to depict or symbolise toasted bread at different cooking stages. In this mode, activation of the user input 114 will cause the algorithm to add, to the existing cooking time, and an additional increment of time being enough to darken the toast or bagel by a fixed amount of darkening, say one half or one shade. Thus, if one slice toast was being cooked at a user selected darkness setting equivalent to 2 and then the user input 114 was activated, the algorithm would add an additional increment of time to make the toast equivalent to a level 3 darkness regardless of the oven temperature. As shown in FIG. 4A, the difference in time is 20 seconds. However, a supplemental increment is 60 seconds 434 when the 3 slices of toast are being toasted at a darkness corresponding to 5.

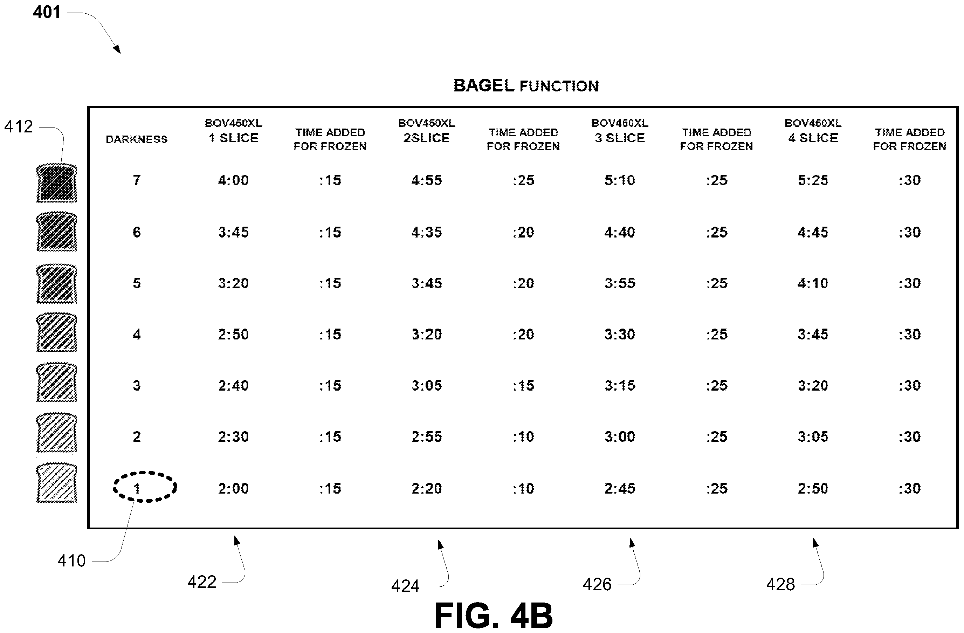

As further shown in FIG. 4A and FIG. 4B, a cooking time can be calculated for a toast function 400 and bagel function 401.

Referring to FIG. 4A and FIG. 4B, a user selected darkness of a toasted bread or bagel can be associated with a numerical value 410 or a symbol 412 depicted on the graphic display 224 of the user interface panel 220. In addition to selecting a darkness input value, the user can also select a food quantity. In this example, the user can select, for each of the toast or bagel functions, one slice 422, two slices 424, three slices 426 or four slices 428. The MCU 111 registers as input values, the selected darkness and the selected quantity. For each unique combination of darkness and quantity there is a value 430 stored in a look up table. The value represents a cooking time for a particular combination of darkness and quantity. The user also has the option of selecting, from an input on the user interface panel 220 an additional increment of time 438 that is added to the nominal cooking time to compensate for frozen bread or a frozen bagel. The frozen foods user input button 312 is shown in FIG. 3 as being adjacent to the start button and just below the Fahrenheit centigrade toggle 314. In the example of FIG. 4A, the additional time added to the nominal cooking time is, for toast, dependent only on the food quantity. In the bagel function, the time added to compensate for frozen food is based on both the selected darkness and food quantity.

A user selection of the supplemental increment input 228 in association with either of the toast or bagel functions as illustrated in FIG. 4A and FIG. 4B will result in the application of one of the aforesaid methods of calculating a supplement or supplement cycle. However, it preferred embodiments, the supplemental increment is an addition of a pre-established but fixed time regardless of the selected darkness or food quantity.

In preferred embodiments, the supplemental increment of time for the toast and bagel functions is 30 seconds. For the BAKE, PIZZA and REHEAT functions an exemplary supplemental increment is 5 minutes. For the ROAST function, an example of a supplemental increment is 10 minutes. For the COOKIES or BROIL functions, a supplemental incremental may be two minutes.

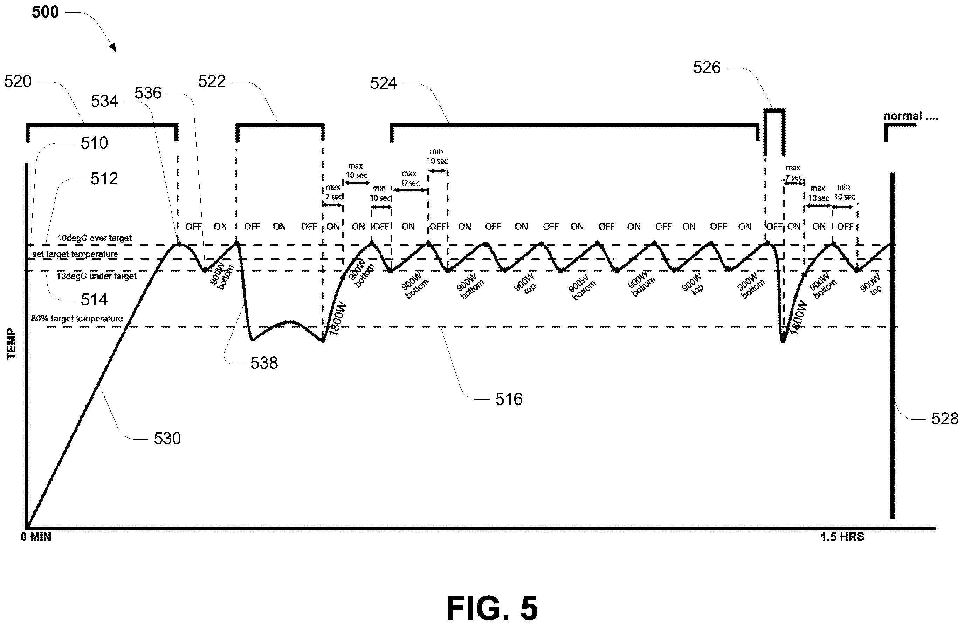

FIG. 5 shows an example of a BAKE mode cooking cycle 500.

By way of example only, FIG. 5 shows the top and bottom heating element cycling logic for a baking function within a 1800W configuration. In this configuration, a set target temperature is established 510, having an associated over target value 512 (for example 10 deg C over) and having an associated under target value 514 (for example 10 deg C under). An associated 80% target value 516 is also determined.

In this example, a preheat cycle 520 can cause the top and bottom heating element to be on 1800W, having a maximum preheat time of 180 seconds. In this example, the door is opened to place food in the over 522 (for example, open for 30 seconds), and baking function having a normal repeat cycle 524 (for example, having a normal repat cycle of a 2:1 ratio in which this interval is repeated in a pattern of two intervals for the bottom elements and one interval for the top element), and an event period 526 (for example, in which the door is quickly opened and closed).

It will be appreciated that, during the period 522, the thermistor/MCU can detect a drop in temperature and when the temperature reached 80% of the target temperature switches the top and bottom heating elements on full (1800W) for a first maximum term (for example, 7 seconds) and then only the bottom heating elements on full (700W) for a second maximum term (for example, 10 seconds) - then disable the heating element for a third minimum term (for example, 10 seconds).

It will be further appreciated that, a total/maximum cooking time 528 can be enforced (for example, 1.5 hours), wherein the total BAKE, ROAST or REHEAT time must be kept less than this maximum cycle time - including if either the time arrows or "A BIT MORE BUTTON" are selected.

In this BAKE function the heating interval for any heating element is a maximum of 17 seconds and a minimum of 10 seconds off time. This interval is repeated in a pattern of two intervals for the bottom elements and one interval for the top element. However, with reference to FIG. 5 it can be seen that the initial pre-heating using all heating elements simultaneously 530 comprises an interval 520 of no more than 3 minutes. This rapid pre-heating continues until a temperature is reached 532 that is approximately 10C 512 more than the said or nominal target temperature 510. This slight overheating by 10C reduces the interval of operation of the oven's relays and thus extends their useful operating life. At the end of the pre-heat interval 520, the elements are switched off and the oven cavity cools until the thermistor registers an actual or implied cavity temperature 534 that is 10C under the nominal or target temperature 514. When this minimum is reached, the bottom elements (only) are switched on and the oven begins to gently heat until the pre-established safe maximum temperature 536 is reached. In this example, an interval 522 is illustrated that represents the oven door being opened and left opened for approximately 30 seconds. This causes a rapid cooling 538 of the oven cavity. When the thermistor registers an actual or inferred oven cavity temperature that is approximately 80% of the target or nominal temperature 516, all of the elements are powered to their maximum wattage for a short period of time, e.g. 7 seconds. Once the cavity temperature is restored, the normal pattern is repeated 524 until there is an event such as another door opening 526. In this example, the total bake time may not exceed 1.5 hours 528. At this point, the MCU terminates the cooking cycle. The MCU will not permit a supplemental incremental or supplemental cycle if it requires that the total "on" time at full power exceeds one hour in any two hour period.

While the present invention has been disclosed with reference to particular details of construction, these should be understood as having been provided by way of example and not as limitations to the scope of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

Similarly, it is to be noticed that the term coupled, when used in the claims, should not be interpreted as being limitative to direct connections only. The terms "coupled" and "connected", along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical, or that two or more elements are not in direct contact with each other but yet still co-operate or interact with each other.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

As used herein, unless otherwise specified the use of terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader, or with reference to the orientation of the structure during nominal use, as appropriate. Similarly, the terms "inwardly" and "outwardly" generally refer to the orientation of a surface relative to its axis of elongation, or axis of rotation, as appropriate.

Similarly it should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

It will be appreciated that an embodiment of the invention can consist essentially of features disclosed herein. Alternatively, an embodiment of the invention can consist of features disclosed herein. The invention illustratively disclosed herein suitably may be practiced in the absence of any element which is not specifically disclosed herein.

## Claims

1. A multi-function cooking apparatus (100), the apparatus including:
a cooking cavity;
at least one upper heating element (234) within the cooking cavity;
at least one lower heating element (236) within the cooking cavity;
a door (212) for substantially closing the cavity;
a user interface element (220), the interface element (220) including a function selector (222) having a broil, a bake and a toast cooking function configuration;
a processor element (111) coupled to the user interface element (220) and adapted to receive a user input command from the user interface element (220), indicative of a user selected cooking function and of one or more user input configuration parameters; the processor obtaining a primary cooking time based on the user input command;
the processor element (111) further being adapted to control independently each of the upper and lower heating elements (234, 236) for maintaining a temperature within the cooking cavity about a target temperature;
wherein the processor element (111) is configured to perform a method of intuitive cooking control, the method comprising the steps of:
(a) receiving user input selection for applying a supplemental cooking time;
(b) calculating a supplemental cooking time based on the user selected cooldng function;
(c) determining a total cooldng time using the calculated supplemental cooking time; and
(d) controlling operation of the upper and lower heating element (234, 236) to provide supplemental cooking time at a last performed target temperature.

2. The apparatus according to claim 1, wherein when the processor element (111) receives the user input selection for applying a supplemental cooldng time after completion of operation for the primary cooldng time, the processor is configured to control operation of the heating elements (234, 236) to provide an overall operation for the total cooldng time by causing operation of at least one heating element (234, 236) to commence for at least the supplemental cooldng time added.

3. The apparatus according to claim 1 or claim 2, wherein the processor element (111) performs an algorithm utilising a stored value from a look-up table to calculate the supplemental cooldng time.

4. The apparatus according to any one of the preceding claims, wherein the processor element (111) further uses a registered state of the oven.

5. The apparatus according to claim 4, wherein the registered state of the oven is door open or door closed.

6. The apparatus according to claim 4, wherein the registered state of the oven is cooking cycle complete or cooking cycle incomplete.

7. The apparatus according to any one of the preceding claims, wherein the processor element (111) performs an algorithm utilising a temperature of the cooking cavity to calculate the supplemental cooking time.

8. The apparatus according to claim 1, wherein a temperature input value is used in indexing a table of stored values to provide a supplemental cooking time.

9. The apparatus according to claim 1, wherein a difference between the temperature of the cooking cavity and the target temperature is used in indexing a table of stored values to provide a supplemental cooking time.

10. The apparatus according to claim 1 or claim 2, wherein the processor element (111) performs an algorithm to calculate the supplemental cooking time as a percentage of a primary cooking time.

11. The apparatus according to any one of the preceding claims, wherein the user interface element (220) includes a first input selector (228) for enabling a user to select when a bit more additional cooking time is requested, whereby this selection provides the user input selection for applying a supplemental cooking time that is received in claim 1, step (a); the processor element (111) adding a supplemental cooking time to a current cooking time.

12. The apparatus according to any one of claims 1 to 11, wherein the user interface control element includes a first input selector (228) for enabling a user to select when a bit more additional cooking time is requested, whereby this selection provides the user input selection for applying a supplemental cooking time that is received in claim 1, step (a); such that, even if the first input selector is selected after completion of a user selected cooking cycle, the processor element (111) provides a further supplemental cooldng time.

13. The apparatus according to any one of the preceding claims, wherein:
controlling the operation of the heating elements (234, 236) comprises operating the heating elements (234, 236) intermittently and independently until the cycle is completed for maintaining a temperature within the cooldng cavity about a target temperature.

## Patentansprüche

1. Eine Multifunktionskochvorrichtung (100), wobei die Vorrichtung folgende Merkmale aufweist:
einen Garraum;
zumindest ein oberes Heizelement (234) in dem Garraum;
zumindest ein unteres Heizelement (236) in dem Garraum;
eine Tür (212) zum im Wesentlichen Schließen des Garraums;
ein Benutzerschnittstellenelement (220), wobei das Schnittstellenelement (220) eine Funktionsauswahleinrichtung (222) umfasst, die eine Grill-, eine Back- und eine Toastzubereitungsfunktionskonfiguration aufweist;
ein Prozessorelement (111), das mit dem Benutzerschnittstellenelement (220) gekoppelt ist und angepasst ist, von dem Benutzerschnittstellenelement (220) einen Benutzereingabebefehl zu empfangen, der eine benutzergewählte Kochfunktion und einen oder mehrere Benutzereingabekonfigurationsparameter angibt; wobei der Prozessor auf der Basis des Benutzereingabebefehls eine primäre Kochzeit erhält;
wobei das Prozessorelement (111) ferner angepasst ist, jedes des oberen und des unteren Heizelements (234, 236) unabhängig zu steuern, um eine Temperatur in dem Garraum über einer Zieltemperatur zu halten;
wobei das Prozessorelement (111) konfiguriert ist, ein Verfahren einer intuitiven Kochsteuerung durchzuführen, wobei das Verfahren die folgenden Schritte aufweist:
(a) Empfangen einer Benutzereingabeauswahl zum Anwenden einer zusätzlichen Kochzeit;
(b) Berechnen einer zusätzlichen Kochzeit auf der Basis der benutzergewählten Kochfunktion;
(c) Bestimmen einer gesamten Kochzeit unter Verwendung der berechneten zusätzlichen Kochzeit und
(d) Steuern des Betriebs des oberen und des unteren Heizelements (234, 236), um eine zusätzliche Kochzeit bei einer zuletzt durchgeführten Zieltemperatur bereitzustellen.

2. Die Vorrichtung gemäß Anspruch 1, bei der, wenn das Prozessorelement (111) die Benutzereingabeauswahl zum Anwenden einer zusätzlichen Kochzeit nach Abschluss des Betriebs für die primäre Kochzeit empfängt, der Prozessor konfiguriert ist, den Betrieb der Heizelemente (234, 236) zu steuern, um einen Gesamtbetrieb für die gesamte Kochzeit bereitzustellen, indem bewirkt wird, dass der Betrieb zumindest eines Heizelements (234, 236) für zumindest die hinzugefügte zusätzliche Kochzeit beginnt.

3. Die Vorrichtung gemäß Anspruch 1 oder Anspruch 2, bei der das Prozessorelement (111) einen Algorithmus durchführt, der einen gespeicherten Wert von einer Nachschlagtabelle verwendet, um die zusätzliche Kochzeit zu berechnen.

4. Die Vorrichtung gemäß einem der vorhergehenden Ansprüche, bei der das Prozessorelement (111) ferner einen registrierten Zustand des Ofens verwendet.

5. Die Vorrichtung gemäß Anspruch 4, bei der der registrierte Zustand des Ofens Tür offen oder Tür geschlossen ist.

6. Die Vorrichtung gemäß Anspruch 4, bei der der registrierte Zustand des Ofens Kochzyklus abgeschlossen oder Kochzyklus nicht abgeschlossen ist.

7. Die Vorrichtung gemäß einem der vorhergehenden Ansprüche, bei der das Prozessorelement (111) einen Algorithmus durchführt, der eine Temperatur des Garraums verwendet, um die zusätzliche Kochzeit zu berechnen.

8. Die Vorrichtung gemäß Anspruch 1, bei der beim Indexieren einer Tabelle gespeicherter Werte ein Temperatureingabewert verwendet wird, um eine zusätzliche Kochzeit bereitzustellen.

9. Die Vorrichtung gemäß Anspruch 1, bei der beim Indexieren einer Tabelle gespeicherter Werte eine Differenz zwischen der Temperatur des Garraums und der Zieltemperatur verwendet wird, um eine zusätzliche Kochzeit bereitzustellen.

10. Die Vorrichtung gemäß Anspruch 1 oder Anspruch 2, bei der das Prozessorelement (111) einen Algorithmus durchführt, um die zusätzliche Kochzeit als einen Prozentsatz einer primären Kochzeit zu berechnen.

11. Die Vorrichtung gemäß einem der vorhergehenden Ansprüche, bei der das Benutzerschnittstellenelement (220) eine erste Eingabeauswahleinrichtung (228) umfasst, die einem Benutzer eine Auswahl ermöglicht, wenn etwas mehr zusätzliche Kochzeit erforderlich ist, wobei diese Auswahl die Benutzereingabeauswahl zum Anwenden einer zusätzlichen Kochzeit bereitstellt, die in Anspruch 1, Schritt (a) empfangen wird; wobei das Prozessorelement (111) einer aktuellen Kochzeit eine zusätzliche Kochzeit hinzufügt.

12. Die Vorrichtung gemäß einem der vorhergehenden Ansprüche, bei der das Benutzerschnittstellenelement (220) eine erste Eingabeauswahleinrichtung (228) umfasst, die einem Benutzer eine Auswahl ermöglicht, wenn etwas mehr zusätzliche Kochzeit erforderlich ist, wobei diese Auswahl die Benutzereingabeauswahl zum Anwenden einer zusätzlichen Kochzeit bereitstellt, die in Anspruch 1, Schritt (a) empfangen wird; so dass, selbst wenn die erste Eingabeauswahleinrichtung nach Abschluss eines benutzergewählten Kochzyklus gewählt wird, das Prozessorelement (111) eine weitere zusätzliche Kochzeit bereitstellt.

13. Die Vorrichtung gemäß einem der vorhergehenden Ansprüche, bei der:
das Steuern des Betriebs der Heizelemente (234, 236) ein Betreiben der Heizelemente (234, 236) auf diskontinuierliche und unabhängige Weise aufweist, bis der Zyklus abgeschlossen ist, um eine Temperatur in dem Garraum über einer Zieltemperatur zu halten.

## Revendications

1. Appareil de cuisson multifonction (100), l'appareil comportant:
une cavité de cuisson;
au moins un élément chauffant supérieur (234) dans la cavité de cuisson;
au moins un élément chauffant inférieur (236) dans la cavité de cuisson;
une porte (212) destinée à fermer substantiellement la cavité;
un élément interface d'utilisateur (220), l'élément interface (220) comportant un sélecteur de fonction (222) présentant une configuration de fonction de gril, de cuisson au four et de rôtisserie;
un élément processeur (111) couplé à l'élément interface d'utilisateur (220) et adapté pour recevoir une commande d'entrée de l'utilisateur à partir de l'élément interface d'utilisateur (220) indiquant une fonction de cuisson sélectionnée par l'utilisateur et un ou plusieurs paramètres de configuration d'entrée d'utilisateur; le processeur obtenant un temps de cuisson primaire sur base de la commande d'entrée de l'utilisateur;
l'élément, processeur (111) étant par ailleurs adapté pour commander indépendamment chacun des éléments chauffants supérieur et inférieur (234, 236) pour maintenir une température à l'intérieur de la cavité de cuisson autour d'une température cible;
dans lequel l'élément processeur (111) est configuré pour réaliser un procédé de commande de cuisson intuitive, le procédé comprenant les étapes consistant à:
(a) recevoir une sélection d'entrée de l'utilisateur pour appliquer un temps de cuisson additionnel;
(b) calculer un temps de cuisson additionnel sur base de la fonction de cuisson sélectionnée par l'utilisateur;
(c) déterminer un temps de cuisson total à l'aide du temps de cuisson additionnel calculé; et
(d) commander le fonctionnement des éléments chauffants supérieur et inférieur (234, 236) pour permettre un temps de cuisson additionnel à une dernière température cible réalisée.

2. Appareil selon la revendication 1, dans lequel, lorsque l'élément processeur (111) reçoit la sélection d'entrée de l'utilisateur pour appliquer un temps de cuisson additionnel après la fin du fonctionnement pendant le temps de cuisson primaire, le processeur est configuré pour commander le fonctionnement des éléments chauffants (234, 236) pour permettre un fonctionnement d'ensemble pendant le temps de cuisson total en provoquant que le fonctionnement d'au moins un élément chauffant (234, 236) commence pendant au moins le temps de cuisson additionnel ajouté.

3. Appareil selon la revendication 1 ou la revendication 2, dans lequel l'élément processeur (111) exécute un algorithme à l'aide d'une valeur mémorisée d'un tableau de consultation pour calculer le temps de cuisson additionnel.

4. Appareil selon l'une quelconque des revendications précédentes, dans lequel l'élément processeur (111) utilise par ailleurs un état enregistré du four.

5. Appareil selon la revendication 4, dans lequel l'état enregistré du four est porte ouverte ou porte fermée.

6. Appareil selon la revendication 4, dans lequel l'état enregistré du four est cycle de cuisson complet ou cycle de cuisson incomplet.

7. Appareil selon l'une quelconque des revendications précédentes, dans lequel l'élément processeur (111) exécute un algorithme à l'aide d'une température de la cavité de cuisson pour calculer le temps de cuisson additionnel.

8. Appareil selon la revendication 1, dans lequel une valeur d'entrée de température est utilisée pour indexer un tableau de valeurs mémorisées pour permettre un temps de cuisson additionnel.

9. Appareil selon la revendication 1, dans lequel une différence entre la température de la cavité de cuisson et la température cible est utilisée pour indexer un tableau de valeurs mémorisées pour permettre un temps de cuisson additionnel.

10. Appareil selon la revendication 1 ou la revendication 2, dans lequel l'élément processeur (111) exécute un algorithme pour calculer le temps de cuisson additionnel comme pourcentage d'un temps de cuisson primaire.

11. Appareil selon l'une quelconque des revendications précédentes, dans lequel l'élément interface d'utilisateur (220) comporte un premier sélecteur d'entrée (228) destiné à permettre à un utilisateur de sélectionner le moment où il est requis un peu plus de temps de cuisson additionnel, où cette sélection permet la sélection d'entrée par l'utilisateur pour appliquer un temps de cuisson additionnel qui est reçu dans la revendication 1, étape (a); l'élément processeur (111) ajoutant un temps de cuisson additionnel à un temps de cuisson actuel.

12. Appareil selon l'une quelconque des revendications 1 à 11, dans lequel l'élément de commande d'interface d'utilisateur comporte un premier sélecteur d'entrée (228) destiné à permettre à un utilisateur de sélectionner le moment où il est requis un peu plus de temps de cuisson additionnel, où cette sélection permet la sélection d'entrée par l'utilisateur pour appliquer un temps de cuisson additionnel reçu dans la revendication 1, étape (a); de sorte que, même si le premier sélecteur d'entrée est sélectionné après la fin d'un cycle de cuisson sélectionné par l'utilisateur, l'élément processeur (111) permet un autre temps de cuisson additionnel.

13. Appareil selon l'une quelconque des revendications précédentes, dans lequel:
la commande du fonctionnement des éléments chauffants (234, 236) comprend le fait de faire fonctionner les éléments chauffants (234, 236) de manière intermittente et indépendante jusqu'à ce que le cycle soit terminé, pour maintenir une température dans la cavité de cuisson autour d'une température cible.
